# EUROPÄISCHE PATENTSCHRIFT

(11) **EP 1 811 632 B1**
(45) Veröffentlichungstag und Bekanntmachung des Hinweises auf die Patenterteilung: **14.03.2018**
(21) Anmeldenummer: 07100386.7
(22) Anmeldetag: 11.01.2007
(51) Int. Cl.: H02K 3/12, H02K 3/38, H02K 3/50

(54) **Rotierende elektrische Maschine**
Rotating electrical machine
Machine électrique tournante

(30) Priorität: 24.01.2006 CH 1072006
(43) Veröffentlichungstag der Anmeldung: 25.07.2007
(73) Patentinhaber: General Electric Technology GmbH, 5400 Baden (CH)
(72) Erfinder: Bänziger, Matthias, 5212, Hausen (CH); Ladstätter, Werner, 8042 Graz (AT); Stallone, Francesco, 6600, Locarno (CH)
(74) Vertreter: General Electric Technology GmbH

(56) Entgegenhaltungen:
- EP-A1- 0 015 429
- EP-A1- 0 669 694
- DE-A1- 10 215 937
- DE-A1- 19 619 727
- DE-A1- 19 726 563
- DE-B- 1 208 000
- GB-A- 1 395 461
- US-A- 1 329 242
- US-A- 4 054 809
- US-A- 4 385 254
- US-A- 5 717 267

## Beschreibung

### TECHNISCHES GEBIET

Die vorliegende Erfindung bezieht sich auf das Gebiet der elektrischen Maschinen. Sie betrifft eine rotierende elektrische Maschine gemäss dem Oberbegriff des Anspruchs 1. Sie betrifft weiterhin ein Verfahren zum Herstellen einer solchen Maschine.

### STAND DER TECHNIK

Derartige Maschinen sind beispielsweise aus der DE-A1-197 26 563 oder der DE-A1-102 15 937 bekannt.

Bei grossen rotierenden elektrischen Maschinen wie z.B. Turbogeneratoren im Leistungsbereich bis zu mehreren 100 MW wird die Statorwicklung durch Wicklungsstäbe mit rechteckigem Querschnitt aufgebaut, die in dafür vorgesehene axiale Nuten im Blechpaket eingelegt und verkeilt werden. Innerhalb der Nuten werden häufig in einer Unterlage und in einer Oberlage zwei Wicklungsstäbe übereinander angeordnet (siehe z.B. die eingangs genannte Druckschrift DE-A1-197 26 563). Die Wicklungsstäbe der Unter- und Oberlage treten an beiden Enden aus dem Statorkörper heraus und werden jeweils in einem Wickelkopf in einem vorbestimmten Schema unter Bildung der Statorwicklung untereinander bzw. mit Anschlüssen für die Statorwicklung verbunden. Die Wicklungsstäbe werden dazu ausserhalb des Statorkörpers um einen festen Winkel nach aussen gebogen, so dass sie mit ihren Endabschnitten auf einem Konus um die Maschinenachse liegen. Gleichzeitig werden die Endabschnitte auf dem Konusmantel quer zur Achse gebogen (verdrillt), um gemäss dem Schema einen Wicklungsstab aus der Unterlage einer Nut mit einem Wicklungsstab aus der Oberlage einer anderen Nut endseitig so zusammenzubringen, das sie auf konzentrischen Kreisen paarweise übereinanderliegen und direkt miteinander verbunden werden können. Die EP0015429 A1 beschreibt eine dynamoelektrische Maschine mit parallelen Ringen, Ringenden und damit verbundenen Phasenleitungen.

Die US4054809 A1 beschreibt eine magnetische Schirmung zum Verringern der Erwärmung eines Statorendes bei einer AC Maschine, die gleichfalls als Tragestruktur für die Endwindungen der Statorwindungen vorgesehen ist.

Die GB1395461 A beschreibt einen Stator einer elektrischen Maschine mit einer Vielzahl von Leitern die sich von einem Ende des Stators zum anderen erstrecken, wo sie von der Längsachse weggebogen sind und spiralförmig gewunden sind.

Bei ausgewählten Paaren von Stabenden, die zu unterschiedlichen Phasen der Statorwicklung gehören, wird keine Verbindung hergestellt, sondern die übereinanderliegenden Stabenden werden separat mit Anschlüssen der Maschine für die Statorwicklung verbunden (siehe Fig. 3 der DE-A1-197 26 563). Da zwischen den beiden Stabenden eines solchen Phasentrennungs-Paares die volle Spannung liegen kann, müssen besondere Vorkehrungen getroffen werden, um die notwendige Spannungsfestigkeit in diesem Bereich zu gewährleisten. Eine dieser Vorkehrungen, die vorgeschlagen worden ist und sich in der Praxis bewährt hat, besteht darin, die zunächst direkt übereinanderliegenden Stabenden der Ober- und Unterlage auf dem Konus des Wickelkopfes tangential zu spreizen, d.h. in entgegengesetzte Richtungen seitwärts auseinanderzubiegen.

Diese Vorkehrung hat jedoch folgende Nachteile: Während ohne tangentiale Spreizung alle Wicklungsstäbe der Ober- und Unterlage denselben "Schritt" oder Verdrillwinkel im Wickelkopf haben, müssen für jede tangentiale Spreizung zwei Wicklungsstäbe mit abweichendem Schritt hergestellt werden. Zusätzlich kann es nötig sein, für ein zum Phasentrennungs-Paar benachbartes Wicklungsstab-Paar einen abweichenden Schritt vorzusehen, um Platz für die tangentiale Spreizung zu schaffen. In der Praxis bedeutet dies bei der Herstellung der Wicklungsstäbe einen erheblichen Mehraufwand.

### DARSTELLUNG DER ERFINDUNG

Es ist daher Aufgabe der Erfindung, eine rotierende elektrische Maschine zu schaffen, bei welcher in der Phasentrennung der Statorwicklung eine hohe Spannungsfestigkeit bei reduziertem Aufwand für die Herstellung der Wicklungsstäbe erreicht wird, sowie eine Verfahren zu deren Herstellung anzugeben.

Die Aufgabe wird durch die Gesamtheit der Merkmale des Anspruchs 1 gelöst. Wesentlich für die erfindungsgemässe Lösung ist, dass bei der Phasentrennung zur Vergrösserung des radialen Abstandes und damit der Spannungsfestigkeit zwischen den unterschiedlichen Phasen eine radiale Spreizung der Stabenden vorgesehen ist. Durch die radiale Spreizung kann für alle Wicklungsstäbe Ober- und Unterstäbe im Wickelkopf relativ zueinander aufgespreizt sind. Eine Trennung unterschiedlicher Phasen ist nicht beschrieben oder erwähnt.

Auch die Druckschrift EP 0 669 694 zeigt eine Aufspreizung von Ober- und Unterstäben im Wickelkopf. Auch in dieser Druckschrift ist die Wickelkopf-Halterung thematisiert, nicht jedoch eine Trennung verschiedener Phasen. Ober- und Unterstab sind hier vielmehr an den Enden leitend verbunden.

### DARSTELLUNG DER ERFINDUNG

Es ist daher Aufgabe der Erfindung, eine mehrphasige rotierende elektrische Maschine zu schaffen, bei welcher in der Phasentrennung der Statorwicklung eine hohe Spannungsfestigkeit bei reduziertem Aufwand für die Herstellung der Wicklungsstäbe erreicht wird, sowie eine Verfahren zu deren Herstellung anzugeben.

Die Aufgabe wird durch die Gesamtheit der Merkmale der Ansprüche 1 und 11 gelöst. Wesentlich für die erfindungsgemässe Lösung ist, dass bei der Phasentrennung zur Vergrösserung des radialen Abstandes und damit der Spannungsfestigkeit zwischen den unterschiedlichen Phasen eine radiale Spreizung der Stabenden vorgesehen ist. Durch die radiale Spreizung kann für alle Wicklungsstäbe der Schritt bzw. der Verdrillwinkel im Wickelkopf gleich gemacht und so die Herstellung vereinfacht werden.

Die Erfindung ist dadurch gekennzeichnet, dass die radiale Spreizung durch eine Hochkantbiegung am Stabende der Wicklungsstäbe eines Paares hervorgerufen wird, wobei die Wicklungsstäbe eines Paares innerhalb des Wicklungskopfes im wesentlichen parallel zueinander verlaufen.

Eine Weiterbildung dieser Ausgestaltung zeichnet sich dadurch aus, dass die Wicklungsstäbe innerhalb des Wicklungskopfes auf einem sich nach aussen zu öffnenden koaxialen Konus liegen, und dass der zur oberen Lage gehörende Wicklungsstab eines Phasentrennungspaares am Stabende durch die Hochkantbiegung axial ausgerichtet ist.

Insbesondere kann der Öffnungswinkel des Konus und der Biegungswinkel der Hochkantbiegung ca. 20° betragen.

Mit Vorteil ist die rotierende elektrische Maschine ein Hochleistungsgenerator mit einer Leistung von einigen hundert Megawatt.

### KURZE ERLÄUTERUNG DER FIGUREN

Die Erfidnung soll nachfolgend anhand von Ausführungsbeispielen im Zusammenhang mit den Zeichnungen näher erläutert werden. Es zeigen
- Fig. 1: im Längsschnitt den anschlussseitigen Wickelkopf einer elektrischen Maschine gemäss einem Ausführungsbeispiel der Erfindung;
- Fig. 2: die Draufsicht in Achsrichtung auf den Bereich der Phasentrennung im Wickelkopf aus Fig. 1;
- Fig. 3: in der Draufsicht eine typische Verbindung zwischen Stabende und Phasenverbindung innerhalb der Phasentrennung;
- Fig. 4: in zwei Teilfiguren (Fig. 4a und b) zwei Schritte bei der Herstellung der Phasenverbindung gemäss der Erfindung;
- Fig. 5: in zwei Teilfiguren (Fig. 5a und b) zwei Querschnitte durch die isolierte Verbindung gemäss Fig. 4b; und
- Fig. 6: eine zu Fig. 4 alternative Form der Verbindung zwischen den Leitern mittels zweier paralleler Platten.

### WEGE ZUR AUSFÜHRUNG DER ERFINDUNG

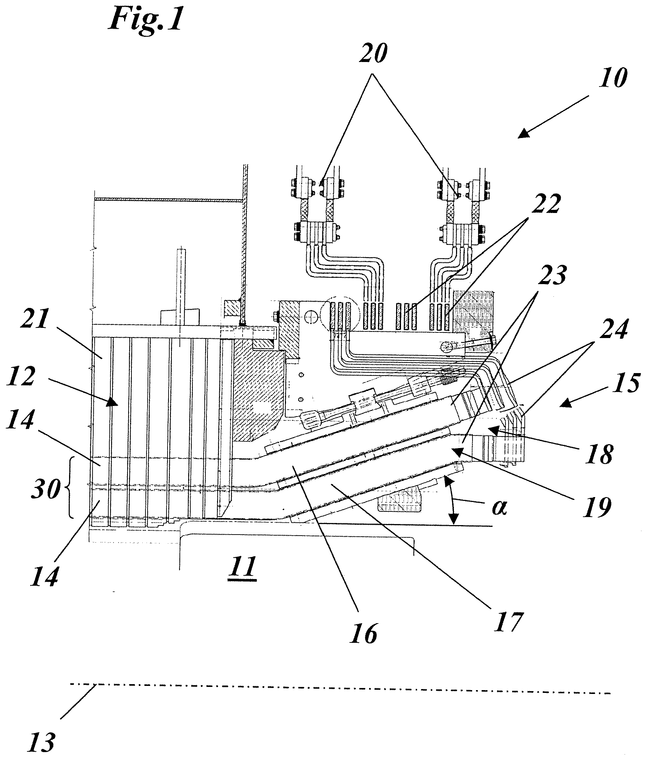

In Fig. 1 ist im Längsschnitt der anschlussseitige Wickelkopf 15 einer rotierenden elektrischen Maschine 10 gemäss einem Ausführungsbeispiel der Erfindung dargestellt. Die Maschine 10 hat einen (nur mit der Kontur angedeuteten) Rotor 11, der um eine Achse 13 dreht und konzentrisch von einem Stator 12 umgeben ist. Der Stator 12 umfasst einen als Blechpaket ausgebildeten Statorkörper 21, in den am inneren Umfang Nuten zur Aufnahme der aus Wicklungsstäben 14 gebildeten Statorwicklung 30 eingelassen sind. In jeder Nut sind übereinander zwei Wicklungsstäbe 14 angeordnet, die zu einer unteren Lage 16 und einer oberen Lage 17 der Statorwicklung 30 gehören.

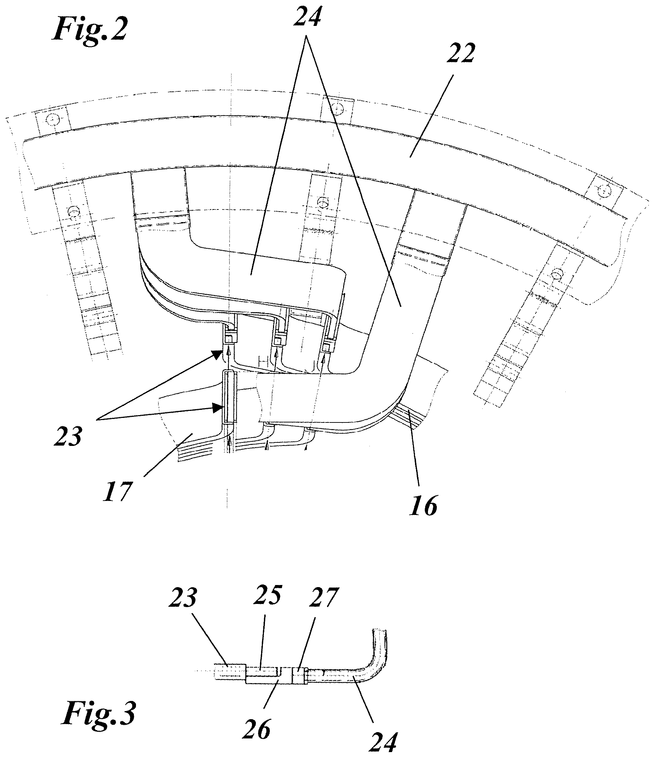

Die Wicklungsstäbe 14 beider Lagen 16, 17 treten mit ihren Endabschnitten aus dem Statorkörper 21 aus und sind innerhalb des Wickelkopfes 15 so nach aussen gebogen, dass die Endabschnitte auf einem Konus um die Achse 13 mit einem Konuswinkel α liegen. Auf der Mantelfläche des Konus findet gleichzeitig eine Verdrillung der Endabschnitte um einen konstanten Verdrillungswinkel in entgegengesetzte Richtungen statt, um Stabenden 23 von Wicklungsstäben 14 aus der oberen und unteren Lage 17 bzw. 16, die in unterschiedlichen Nuten liegen, auf konzentrischen Kreisen um die Achse 13 nach einem vorgegebenen Schema paarweise übereinander anzuordnen. In Fig. 2 sieht man nebeneinander drei Paare von Stabenden 23 aus der oberen Lage 17 und der unteren Lage 16, die innerhalb einer Phasentrennung separat über Phasenverbindungen 24 und Ringe 22 mit entsprechenden Anschlüssen 20 (Fig. 1) der Maschine verbunden sind.

Um bei den Verbindungs- bzw. Ableitungsanschlüssen in der Phasentrennung einen grösseren Abstand zwischen den unterschiedlichen Phasen, d.h. zwischen den Stabenden der beiden Wicklungsstäbe 14 eines Paares, zu bekommen, wird das Stabende 23 des Wicklungsstabes 14 aus der oberen Lage 17 entgegen dem Konuswinkel α mit einer Hochkantbiegung 19 (Fig. 1) in die Horizontallage (d.h. achsenparallel) gebogen. Durch die Hochkantbiegung 19 vor dem Stabende und die damit verbundene radiale Spreizung 18 kann auch bei hohen Spannungen auf ein tangentiales Spreizen der Phasentrennung verzichtet werden. Die Vielfalt der Stabvarianten kann dadurch reduziert werden. Ein weiterer Vorteil dieser Geometrie ist die verbesserte Zugänglichkeit für Montagearbeiten wie Löten, Nachisolieren der Phasenverbindungen und der Schnittstelle.

Mit der radialen Spreizung kann auch unter engen Platzverhältnissen ein grösserer Abstand zwischen den Wicklungsstäben bzw. Phasenverbindungsanschlüssen unterschiedlicher Phasen und somit eine hohe Nennspannung bei Generatoren in kompakter Bauweise realisiert werden.

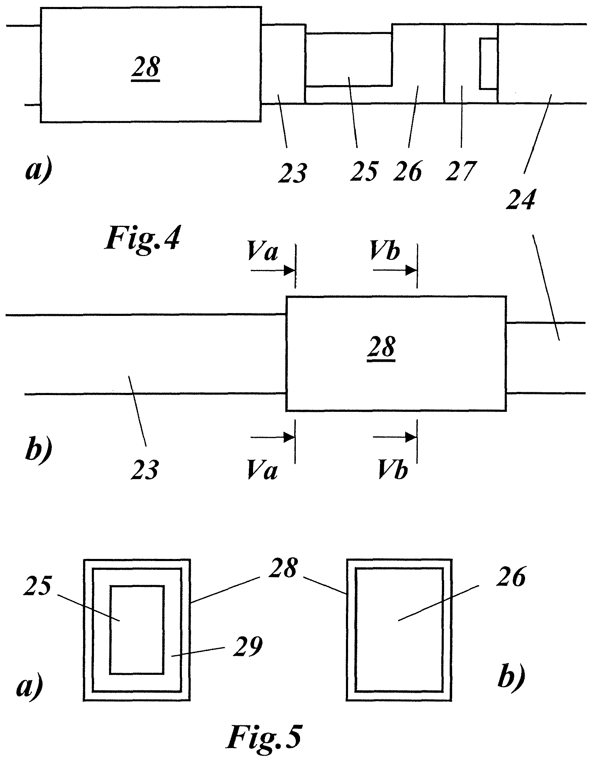

Mit der Spreizung der Stabenden in der Phasentrennung eng verknüpft ist die Isolierung der Verbindungen, die zwischen den Stabenden verschiedener Phasen und den angeschlossenen Phasenverbindungen (Rundverbindungen) bestehen. Eine typische Verbindung ist in Fig. 3 in der Draufsicht dargestellt: Am Stabende 23 ist auf einer gewissen Länge die Isolierung (29 in Fig. 5a) entfernt, so dass der Leiter 25 frei liegt. An den frei liegenden Leiter 25 ist flächig eine speziell geformte Öse 26 aus Kupfer angelötet, an deren freies Ende ein Anpassstück 27 (ebenfalls aus Kupfer) anschliesst. Eine angepasste Ausnehmung im Anpassstück 27 nimmt den von der Isolierung befreiten Leiter 25 der Phasenverbindung 24 auf.

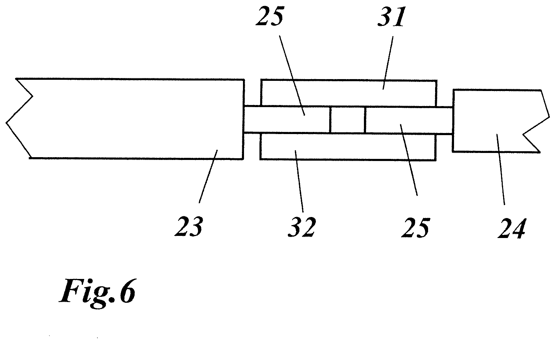

Eine alternative Konfiguration der Verbindung ist in Fig. 6 wiedergegeben. Hier werden die beiden Leiter 25 des Stabendes 23 und der Phasenverbindung 24 von zwei Seiten mittels zweier paralleler Platten 31, 32 verbunden.

Innerhalb der in Fig. 3 dargestellten Verbindung liegen der Leiter 25, die Öse 26 und das Anpassstück 27 als metallische Teile frei und müssen isoliert werden. Für die Isolierung zweier miteinander verbundenen Stabenden ausserhalb der Phasentrennung sind in der Vergangenheit bereits einseitig aufsteckbare Phasentrennungskappen (EP-A1-0 899 851) und mit Schläuchen fixierte, imprägnierbare Vlieskappen (EP-B1-0 713 281) vorgeschlagen worden. Die Vlieskappen erfordern einen aufwändigen Imprägnierungsschritt. Die seitlich aufsteckbaren Phasentrennungskappen haben folgende Nachteile:
- Offene, einzeln angefertigte, handlaminierte Kappen sind teuer.
- Es ist der Einsatz von Füllkitt notwendig.
- Die Kappen haben eine grosse Wandstärke und damit einen schlechten Wärmeübergang.
- Die Kappen sind bei Reparatur oder Analyse nur mit erheblichem Aufwand demontierbar.

Eine Verbesserung kann hier gemäss den Fig. 4a,b und 5a,b erfolgen, wenn eine überziehbare Phasentrennungskappe 28 verwendet wird. Folgende Grundvoraussetzungen sind notwendig, damit die überziehbare Phasentrennungskappe realisiert werden kann:
- Vorwiegend axialer Anschluss der Phasenverbindungen an die Wicklungs- bzw. Stabenden.
- Schlankes Design der Ösen 26, die blank in etwa die Breite und Höhe der isolierten Wicklungsstäbe 14 bzw. der Phasenverbindung 24 aufweist.

Das zugehörige Verfahren läuft wie folgt: Vor der Montage der Ösen 26 werden die schlauchförmigen Phasentrennungskappen 28 über das Stabende 23 oder die Phasenverbindung 24 gezogen und soweit entfernt platziert, dass sie beim Löten nicht beschädigt werden können (Fig. 4a). Nach dem Fertigstellen der Verbindung 24, 25, 26, 27 wird die Phasentrennungskappe 28 über den Verbindungsbereich geschoben.

Das Material der Phasentrennungskappe 28 kann entweder aus dauerelastischem und temperaturbeständigem Silikonmaterial sein, und etwas kleinere Nennmasse als die Aussenkonturen von Ösen 26 und Isolierung 29 haben. Oder aber es ist aus Polyester oder ähnlich schrumpfenden Material, das nach dem Zurückschieben auf den blanken Teil mittels Heissföhn sich der realen Geometrie sauber anpasst. In beiden Fällen schmiegt sich die Phasentrennungskappe eng an die Aussenkontur im Verbindungsbereich an und unterstützt so wirksam die mit der radialen Spreizung erzielte Spannungsfestigkeit.

### BEZUGSZEICHENLISTE

- 10: elektrische Maschine
- 11: Rotor
- 12: Stator
- 13: Achse
- 14: Wicklungsstab
- 15: Wickelkopf
- 16: untere Lage (Wicklung)
- 17: obere Lage (Wicklung)
- 18: Spreizung (radial)
- 19: Hochkantbiegung
- 20: Anschluss
- 21: Statorkörper (Blechpaket)
- 22: Ring
- 23: Stabende
- 24: Phasenverbindung
- 25: Leiter (Wicklungsstab)
- 26: Öse
- 27: Anpassstück
- 28: Phasentrennungskappe (schlauchförmig)
- 29: Isolierung
- 30: Statorwicklung
- 31, 32: Platte
- α: Konuswinkel

## Patentansprüche

1. Mehrphasige rotierende elektrische Maschine (10) mit einem um eine Achse (13) drehenden Rotor (11), der konzentrisch von einem Stator (12) mit einer in einen Statorkörper (21) eingelegten Statorwicklung (30) umgeben ist, wobei die Statorwicklung (30) in konzentrischer Anordnung eine achsenfernere untere Lage (16) und eine achsenähere obere Lage (17) von sich axial erstreckenden Wicklungsstäben (14) umfasst, welche an den Enden des Stators (12) aus dem Statorkörper (21) heraustreten und innerhalb eines Wicklungskopfes (15) mit ihren Stabenden (23) auf zwei konzentrischen Kreisen paarweise in radialer Richtung übereinander angeordnet sind, wobei die Wicklungsstäbe (14) eines Paares innerhalb des Wickelkopfes (15) im wesentlichen parallel zueinander verlaufen, **dadurch gekennzeichnet, dass** bei denjenigen Wicklungsstäben eines Paares, die innerhalb einer Phasentrennung zu unterschiedlichen Phasen gehören, zur Vergrösserung des radialen Abstandes zwischen den unterschiedlichen Phasen eine radiale Spreizung (18) der Stabenden (23) vorgesehen ist, welche durch eine Hochkantbiegung (19) am Stabende (23) der Wicklungsstäbe (14) eines Paares hervorgerufen wird .

2. Maschine nach Anspruch 1, **dadurch gekennzeichnet, dass** die Wicklungsstäbe (14) innerhalb des Wicklungskopfes (15) auf einem sich nach aussen zu öffnenden koaxialen Konus liegen, und dass der zur oberen Lage (17) gehörende Wicklungsstab (14) eines Phasentrennungspaares am Stabende (23) durch die Hochkantbiegung (19) axial ausgerichtet ist.

3. Maschine nach Anspruch 2, **dadurch gekennzeichnet, dass** der Öffnungswinkel (α) des Konus und der Biegungswinkel der Hochkantbiegung (19) ca. 20° beträgt.

## Claims

1. Multiphase rotating electrical machine (10) having a rotor (11), which rotates about an axis (13) and is surrounded concentrically by a stator (12) having a stator winding (30) inserted into a stator body (21), the stator winding (30) comprising, in a concentric arrangement, a lower layer (16), which is more remote from the axis, and an upper layer (17), which is closer to the axis, of axially extending winding bars (14), which emerge from the stator body (21) at the ends of the stator (12) and are arranged, within an end winding (15), with their bar ends (23), on two concentric circles in pairs one above the other in the radial direction, wherein the winding bars (14) of a pair run substantially parallel to one another within the end winding (15), **characterized in that**, in those winding bars of a pair which belong to different phases within a phase segregation, radial splaying (18) of the bar ends (23) is provided so as to increase the radial distance between the different phases, which the radial splaying is brought about by an edgewise bend (19) at the bar end (23) of the winding bars (14) of a pair.

2. Machine according to Claim 1, **characterized in that** the winding bars (14) lie, within the end winding (15), on a coaxial cone, which can be opened towards the outside, and **in that** the winding bar (14), which belongs to the upper layer (17), of a phase segregation pair is aligned axially at the bar end (23) by the edgewise bend (19).

3. Machine according to Claim 2, **characterized in that** the opening angle (α) of the cone and the bending angle of the edgewise bend (19) is approximately 20°.

## Revendications

1. Machine électrique tournante polyphasée (10) comportant un rotor (11) tournant autour d'un axe (13), qui des entouré concentriquement par un stator (12) ayant un enroulement de stator (30) introduit dans un corps de stator (21), dans lequel l'enroulement de stator (30) comprend selon un agencement concentrique une couche inférieure (16) éloignée de l'axe et une couche supérieure (17) proche de l'axe de barres d'enroulement (14) s'étendant axialement, lesquelles barres aux sortent du corps de stator (21) extrémités du stator (12) et sont disposées l'une sur l'autre par paires en direction radiale à l'intérieur d'une tête d'enroulement (15) de manière à ce que leurs extrémités de barres (23) se situent sur deux cercles concentriques, dans lequel les barres d'enroulement (14) d'une paire s'étendent sensiblement parallèlement les unes aux autres à l'intérieur de la tête d'enroulement (15), **caractérisé en ce qu'**il est prévu une expansion radiale (18) des extrémités de barres (23), pour les barres d'enroulement d'une paire qui appartiennent à des phases différentes au sein d'une séparation de phase, afin d'augmenter la distance radiale entre les différentes phases, laquelle expansion est provoquée par un coude en H (19) aux extrémités de barres (23) des barres d'enroulement (14) d'une paire.

2. Machine selon la revendication 1, **caractérisée en ce que** les barres d'enroulement (14) à l'intérieur de la tête d'enroulement (15) se situent sur un cône coaxial s'ouvrant vers l'extérieur, et **en ce que** la barre d'enroulement (14) appartenant à la couche supérieure (17) d'une paire de séparation de phases est orientée axialement vers l'extrémité de barre (23) par le coude en H (19).

3. Machine selon la revendication 2, **caractérisée en ce que** l'angle d'ouverture (α) du cône et l'angle de coude du coude en H (19) est d'environ 20°.
